Europäisches Patentamt

European Patent Office

Office européen des brevets

(11) Numéro de publication: **0 308 334 B1**

# FASCICULE DE BREVET EUROPEEN

(45) Date de publication de fascicule du brevet: **03.02.93**

(51) Int. Cl.5: **H01F 10/16,** H01F 41/14, H01F 10/30

(21) Numéro de dépôt: **88402329.2**

(22) Date de dépôt: **15.09.88**

(54) **Matériau magnétique composite et son procédé de fabrication.**

(30) Priorité: **18.09.87 FR 8712971**

(43) Date de publication de la demande: **22.03.89 Bulletin 89/12**

(45) Mention de la délivrance du brevet: **03.02.93 Bulletin 93/05**

(84) Etats contractants désignés: **BE CH DE ES GB IT LI NL**

(56) Documents cités:
CH-A- 411 997
US-A- 3 524 173
US-A- 4 608 297

(73) Titulaire: **COMMISSARIAT A L'ENERGIE ATO-MIOUE Etablissement de Caractère Scientifique Technique et Industriel 31/33, rue de la Fédération F-75015 Paris(FR)**

(72) Inventeur: **Miltenberger, Bernard Le Maine d'Avignon F-33650 Labrede(FR)**
Inventeur: **Sajer, Jean-Michel 32, Avenue de la Libération F-33138 Lanton(FR)**

(74) Mandataire: **Mongrédien, André et al c/o BREVATOME 25, rue de Ponthieu F-75008 Paris(FR)**

EP 0 308 334 B1

## Description

La présente invention a pour objet un matériau magnétique composite notamment utilisable comme matériau absorbant les micro-ondes, dans un domaine de longueur d'onde allant de 50 MHz à quelques GHz.

Dans l'application à l'absorption aux micro-ondes, le matériau composite de l'invention peut notamment être utilisé comme matériau de revêtement d'une chambre anéchoïde (chambre sans écho) et comme filtres électromagnétiques utilisés en particulier en télécommunication, en informatique et dans les fours à micro-ondes.

Les matériaux absorbants les micro-ondes actuellement connus se présentent sous la forme de couches minces, d'épaisseur inférieure à quelques cm, réalisées avec des matériaux denses tels que la ferrite ou à partir de la dispersion de ces matériaux denses dans un liant organique approprié.

En particulier, on trouve actuellement dans le commerce des tuiles de ferrite absorbant les micro-ondes entre 100 et 1000 MHz, ayant une épaisseur de 5 à 15 mm et une densité surfacique de l'ordre de 20 à 30 kg/m², donc élevée. On trouve aussi des matériaux composites organiques chargés tels que des caoutchoucs chargés avec des ferrites ou des métaux dont la fréquence d'utilisation varie de 5 à 15 GHz, dont l'épaisseur varie de 1 à 5 mm et dont la densité surfacique, élevée, varie de 2 à 15 kg/m².

Comme autres matériaux absorbants les micro-ondes actuellement connus, on trouve des motifs pyramidaux ou des structures alvéolaires présentant une épaisseur de plusieurs dizaines de centimètres et une densité surfacique faible allant de 1 à 5 kg/m2. Ces derniers matériaux sont généralement utilisés pour équiper des chambres anéchoïdes en vue d'études expérimentales.

Quelles que soient la nature et l'application des matériaux absorbant les micro-ondes connus, le problème du poids se pose ; soit que les produits sont minces mais denses, soit qu'ils sont légers mais épais. Ces problèmes de poids et d'encombrement limitent considérablement les applications de ces matériaux absorbants, chaque structure ou configuration étant bien spécifique d'une application particulière. En outre, leur absorption des micro-ondes est généralement limitée à une faible gamme de longueur d'onde.

La présente invention a justement pour objet un matériau magnétique composite et son procédé de fabrication permettant notamment de remédier aux inconvénients ci-dessus. Ce matériau peut être réalisé sous forme de couches minces, de faible masse, pour absorber les micro-ondes, dans un grand domaine de fréquence, allant de 50 MHz à quelques GHz (environ 10 GHz).

De façon plus précise, l'invention a pour objet un matériau magnétique composite, qui comprend une alternance de couches en matériau magnétique et de couches en matériau électriquement isolant, chaque couche de matériau magnétique est formée de plusieurs pavés magnétiques séparés les uns des autres par des joints électriquement isolants, le volume total Vp occupé par les pavés et le volume total Vj occupé par les joints et les couches isolantes sont tels que le rapport Vp/Vj varie de 10 à 50.

Ce matériau composite peut être réalisé sous forme de couches minces, d'épaisseur totale inférieure à 1 mm ce qui, malgré la densité élevée (8 à 9 g/cm³) du matériau magnétique seul conduit à un matériau composite ayant une densité surfacique allant de 0,5 à 1 kg/m². Cette densité surfacique faible permet notamment le recouvrement d'objets de forme quelconque, contrairement aux matériaux de l'art antérieur.

Les pavés peuvent présenter n'importe quelle forme et présenter notamment une surface triangulaire, carrée, rectangulaire, voire même circulaire.

Selon l'invention, les couches magnétiques peuvent être réalisées en des matériaux ferromagnétiques, identiques ou différents. Il en est de même pour les couches isolantes. En outre, les joints isolants peuvent être réalisés en un matériau identique ou différent de celui formant les couches isolantes.

De préférence, les matériaux magnétiques utilisés sont des matériaux ferromagnétiques amorphes à forte perméabilité magnétique initiale, c'est-à-dire au moins 3 fois supérieure au matériau magnétique classique pour la permittivité réelle, tels que le fer doux, les alliages de fer et/ou de nickel tels que le permalloy, des alliages de molybdène, des alliages à base de bore ou à base de cobalt. En effet, ces derniers composés amorphes métalliques présentent, pour une quantité élevé de cobalt, des perméabilités magnétiques réelle $\mu'$ et imaginaire $\mu''$ (ou pertes magnétiques) très importantes, à condition toutefois d'avoir orienté les moments magnétiques des différentes couches magnétiques parallèlement à une même direction.

La présence de joints isolants électriques entre les pavés de matériau magnétique permet de réduire le caractère conducteur électrique du matériau composite selon l'invention en présence de champs électromagnétiques ayant une fréquence pouvant aller jusqu'à quelques GHz et donc d'utiliser ce matériau pour absorber les micro-ondes. Dans cette gamme de fréquences, le composé magnétique seul présente une conductivité allant de $10^5$ à $10^6$ ohm$^{-1}$m$^{-1}$ alors que le matériau composite selon l'invention ne présente plus qu'une conductivité de quelques ohm⁻¹m⁻¹.

Du fait de la forte conductivité du composé magnétique seul, l'épaisseur d'utilisation de ce composé doit être inférieure à l'épaisseur de peau afin que l'ensemble de chaque couche magnétique (matériau magnétique plus joints) participe à l'absorption des micro-ondes. Ceci conduit à utiliser des couches magnétiques dont l'épaisseur est comprise dans l'intervalle allant de 200 à 400 nm.

Le choix du rapport Vp/Vj a été déterminé de façon à conserver le maximum de propriétés magnétiques au matériau composite tout en lui conférant des propriétés électriquement isolantes pour des champs électromagnétiques dont la fréquence est comprise entre 50 MHz et quelques GHz.

Les matériaux magnétiques amorphes utilisables dans l'invention sont de préférence des matériaux ferromagnétiques à base de cobalt et contenant au moins un élément choisi parmi le zirconium ou le niobium tels que les matériaux du type $Co_xNb_yZr_z$, avec x allant de 80 à 95 et par exemple allant de 87 à 93 et y + z valant 100-x, où y et z peuvent prendre chacun toutes les valeurs, entières ou non, allant de 20 à 0.

Comme matériaux magnétiques utilisables on peut citer le $CO_{87}Zr_5Nb_8$ , le $Co_{87}Nb_{11,5}Zr_{1,5}$, le $Co_{89}Nb_{6,5}Zr_{4,5}$, le $Co_{89}Zr_{11}$ et le $Co_{93}Zr_7$. Ces matériaux peuvent se présenter sous la forme de pavés à base carrée de côté L, séparés par des joints isolants de largeur l, avec l/L allant de $10^{-2}$ à $10^{-4}$. L peut par exemple varier de 0,5 à 5 mm.

Comme matériaux électriquement isolants constituant les joints isolants et les couches isolantes, on peut citer le quartz, le verre, la silice, le silicium amorphe, l'alumine, le nitrure de silicium, le sulfure de zinc. De préférence, on utilise une couche d'air ou un oxyde mixtes de Co, Nb et/ou Zr pour constituer les joints et du $SiO_2$ pour constituer les couches isolantes intercalées entre deux couches magnétiques. Ces couches isolantes ont une épaisseur allant de 10 nm à 10μm.

Dans l'application à l'absorption des micro-ondes, le nombre de couches en matériau magnétique et en matériau isolant, alternées, est fonction de la fréquence du champ électromagnétique que l'on désire absorber. En règle générale, plus la fréquence à absorber est élevée, plus le nombre de couches est réduit. L'épaisseur des joints peut aussi servir au réglage de la fréquence d'absorption.

L'invention a aussi pour objet un procédé de fabrication d'un matériau magnétique composite tel que décrit précédemment. Ce procédé se caractérise en ce qu'il comprend les étapes suivantes :

- au moins une étape de dépôt d'une couche en matériau magnétique sur une couche en matériau électriquement isolant,
- au moins une étape de découpe de la couche magnétique pour former dans ladite couche magnétique des pavés magnétiques séparés les uns des autres, ou au moins une étape de réalisation de joints isolants dans ladite couche magnétique,
- au moins une étape d'orientation des moments magnétiques des pavés de la couche magnétique selon une même direction parallèle au plan de la couche magnétique.

Le mot "découpe" doit être pris au sens large et peut notamment correspondre à une gravure.

Les joints isolants entre les pavés peuvent être formés directement par une couche d'air, lors de la découpe de la couche magnétique, par remplissage de la ligne de coupe par un matériau isolant ($SiO_2$, $Si_3N_4$, ALN, ZnS, matière plastique ...) ou encore par oxydation du matériau magnétique, dans la masse.

L'orientation des moments magnétiques des atomes constitutifs des pavés magnétiques, tous selon une même direction pour une même couche magnétique, permet d'obtenir un matériau magnétique global de fortes perméabilités réelle et imaginaire. Cette orientation est réalisée avant ou après la réalisation des pavés magnétiques, notamment en soumettant le matériau magnétique à un traitement thermique en présence d'un champ magnétique orienté parallèlement au plan des couches magnétiques.

Selon une mise en oeuvre préférée du procédé selon l'invention, on effectue les étapes successives suivantes :

(a) dépôt d'une première couche de matériau magnétique amorphe sur une première couche de matériau isolant,

(b) formation dans la première couche magnétique de bandes magnétiques, parallèles à une première direction,

(c) dépôt sur la structure obtenue en (b) d'une seconde couche de matériau isolant,

(d) dépôt sur la seconde couche isolante d'une seconde couche de matériau magnétique amorphe,

(e) formation dans la seconde couche magnétique de bandes magnétiques, parallèles à une seconde direction perpendiculaire à la première direction,

(f) dépôt sur la structure obtenue en (e) d'une troisième couche de matériau isolant puis répétition des étapes (a) à (e) autant de fois que nécessaire,

(g) traitement thermique de la structure obtenue en (f) en présence d'un champ magnétique tournant dans le plan des couches,

(h) traitement de la structure obtenue en (g) afin de former dans chaque couche magnétique des pavés magnétiques séparés les uns des autres.

L'étape (g) permet d'orienter les moments magnétiques de chaque couche magnétique selon la direction associée à la dimension la plus grande des bandes, c'est-à-dire selon la première direction pour la première couche magnétique et selon la seconde direction pour la seconde couche magnétique, car cette position est la plus stable énergétiquement. Ainsi, on obtient avant d'effectuer l'étape (h) des plans de matériaux magnétiques dont la direction d'aimantation tourne de 90° d'une couche à l'autre.

En outre, cette étape (g) permet d'éviter tout comportement critique du matériau composite magnétique-isolant de l'invention.

En particulier, le traitement thermique sous champ magnétique permet un comportement du matériau composite isotrope par rapport à la polarisation de l'onde à absorber.

Les pavés magnétiques peuvent être réalisés par découpage des couches magnétiques à l'aide d'un faisceau laser ou électronique, par découpage mécanique ou bien par lithographie, l'étape de gravure des couches magnétiques étant réalisée en phase sèche ou humide.

De préférence, la formation des pavés ou étape (h) consiste en un découpage laser de l'empilement des couches magnétiques et des couches isolantes.

Selon une variante du procédé de l'invention, on réalise plusieurs empilements de couches isolantes et de couches magnétiques, on assemble ces empilements et on oriente les moments magnétiques des pavés, chaque empilement étant obtenu en :

- déposant une première et une seconde couches de matériau magnétique de part et d'autre d'un support isolant,
- découpant dans les deux couches magnétiques les pavés magnétiques, et
- déposant une première et une seconde couches isolantes sur respectivement la première et la seconde couches magnétiques.

D'autres caractéristiques et avantages de l'invention ressortiront mieux de la description qui va suivre, donnée à titre illustratif et non limitatif, en référence aux figures annexées, dans lesquelles :

- la figure 1 représente schématiquement, en perspective, un premier mode de réalisation du matériau composite selon l'invention,
- la figure 2 représente schématiquement, en perspective, un second mode de réalisation du matériau composite selon l'invention,
- la figure 3 donne les variations des perméabilités magnétiques réelle $\mu'$ et imaginaire $\mu''$ d'une couche continue de $Co_{87}Nb_{11,5}Zr_{1,5}$, de 200 nm d'épaisseur en fonction de la fréquence F d'un champ électromagnétique appliqué à la couche,
- la figure 4 donne les variations des perméabilités magnétiques réelle $\mu'$ et imaginaire $\mu''$ d'une couche de $Co_{87}Nb_{11,5}Zr_{1,5}$, d'une épaisseur de 200 nm et découpée en pavés selon l'invention, en fonction de la fréquence F d'un champ électromagnétique appliqué à cette couche,
- la figure 5 donne les variations des permittivités électriques réelle $\epsilon'$ et imaginaire $\epsilon''$ d'une couche de $Co_{87}Nb_{11,5}Zr_{1,5}$ découpée en pavés selon l'invention, de 200 nm d'épaisseur, en fonction de la fréquence F d'un champ électromagnétique appliqué à cette couche, et
- les figures 6a-6e et 7a-7b représentent, schématiquement, selon deux variantes, les différentes étapes de fabrication d'un matériau composite selon l'invention.

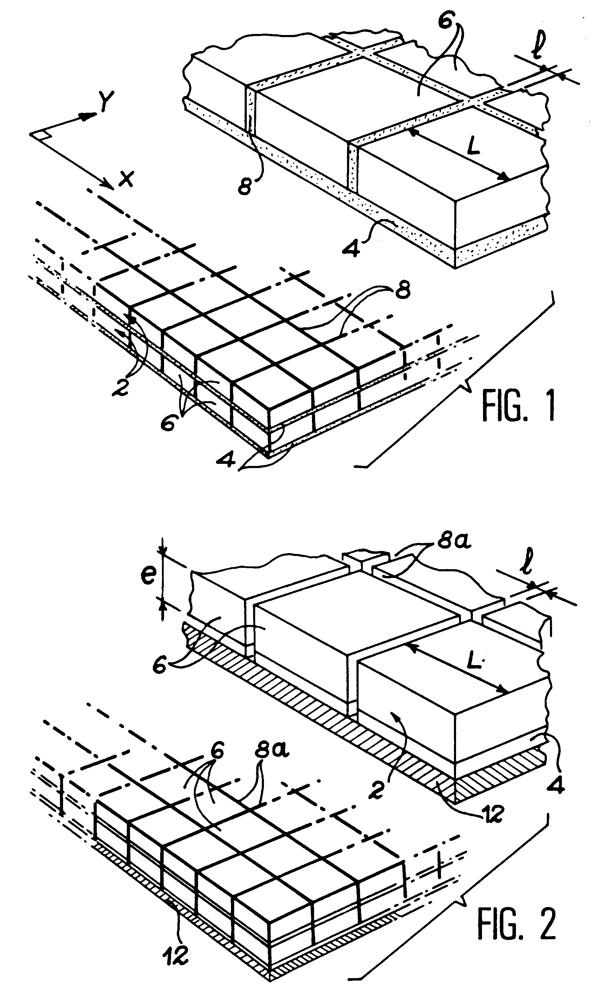

Le matériau composite selon l'invention comprend comme représenté sur la partie a de la figure 1 plusieurs couches 2 en matériau magnétique amorphe et plusieurs couches 4 d'un matériau électriquement isolant, les couches 2 et 4 étant alternées. Les couches magnétiques 2 sont formées de pavés 6 de forme parallélépipédique, à base carrée, séparés les uns des autres par des joints isolants 8. Les moments magnétiques des pavés 6 d'une même couche magnétique 4 sont tous orientés selon une même direction, contenue dans le plan XY des couches.

Les pavés 6 sont en particulier réalisés en $Co_{87}b_{11,5}Zr_{1,5}$; ils présentent une longueur L de 1000 $\mu$m et une épaisseur de 200 nm (partie b). Les joints séparant les pavés 6 présentent une largeur l de 10 $\mu$m. Ils sont réalisés notamment en $SiO_2$ ou en un oxyde mixte de Co et de Zr et éventuellement de Nb.

Les couches isolantes 4 sont réalisées en $SiO_2$ et présentent une épaisseur de 10 nm.

Conformément à l'invention le rapport l/L est voisin de $10^{-3}$ et donc le rapport Vp/Vj est voisin de 20, Vp et Vj représentent respectivement le volume total occupé par les pavés et le volume total occupé par les joints et les couches isolantes.

Il est aussi possible d'utiliser comme joint isolant une couche d'air 8a comme représenté sur la figure 2 de largeur l et d'épaisseur e (partie b) égales respectivement à celles des pavés magnétiques 6. En outre, les couches isolantes 4 séparant deux couches magnétiques 2 peuvent ne plus se présenter sous la forme d'une couche continue mais sous la forme de pavés 10 ; chaque pavé isolant 10 est situé en regard d'un

4

pavé magnétique 6 et présente les mêmes dimensions surfaciques que ce dernier.

Dans ce cas, afin d'assurer une rigidité et la cohésion du matériau composite selon l'invention, un support 12 en matériau isolant ou conducteur doit être prévu sur la face inférieure du matériau composite. Ce matériau 12 est en particulier constitué d'une couche de silice, de verre ou d'acier, dont l'épaisseur est fonction de la rigidité souhaitée.

Le matériau composite tel que représenté sur les figures 1 et 2 peut être utilisé comme matériau absorbant les micro-ondes dans une gamme de fréquence allant de 50 MHz à quelques GHz. Il peut être utilisé comme matériau de revêtement et présente une densité surfacique au plus égale à 1 kg/m$^2$. Ces performances d'absorption atteignent localement de -20 à -30 dB.

Le nombre de couches magnétiques 2 constituant le matériau composite de l'invention dépend de la fréquence du champ électromagnétique que l'on désire absorber. Le tableau ci-après donne un exemple du nombre de couches magnétiques N à utiliser en fonction de la fréquence électromagnétique que l'on désire absorber. Ce tableau est établi pour des couches 4 de 200 nm d'épaisseur formées de pavés de $Co_{87}Nb_{11,5}Zr_{1,5}$ de 1 x1 mm$^2$, séparés par une couche d'air de 10 $\mu$m d'épaisseur, les couches magnétiques étant séparées les unes des autres par des couches isolantes 4 de SiO$_2$ de 10 nm. Dans ce tableau $e_T$ représente l'épaisseur totale du matériau composite.

TABLEAU

| Fréquence de fonctionnement | N | $e_T$ ($\mu$m) |
|---|---|---|
| 500 MHz | 2400 | $\simeq$ 600 |
| 1 GHz | 380 | $\simeq$ 100 |
| 2 GHz | 280 | $\simeq$ 70 |

L'utilisation d'un rapport Vp/Vj allant de 10 à 50 permet d'obtenir un matériau composite ayant des propriétés magnétiques peu différentes de celles d'un matériau magnétique mince monobloc correspondant. En particulier, les perméabilités magnétiques réelle $\mu'$ et imaginaire $\mu''$ d'un matériau composite selon l'invention restent élevées et leurs variations en fonction de la fréquence d'un champ électromagnétique excitateur sont similaires à celles du matériau monobloc.

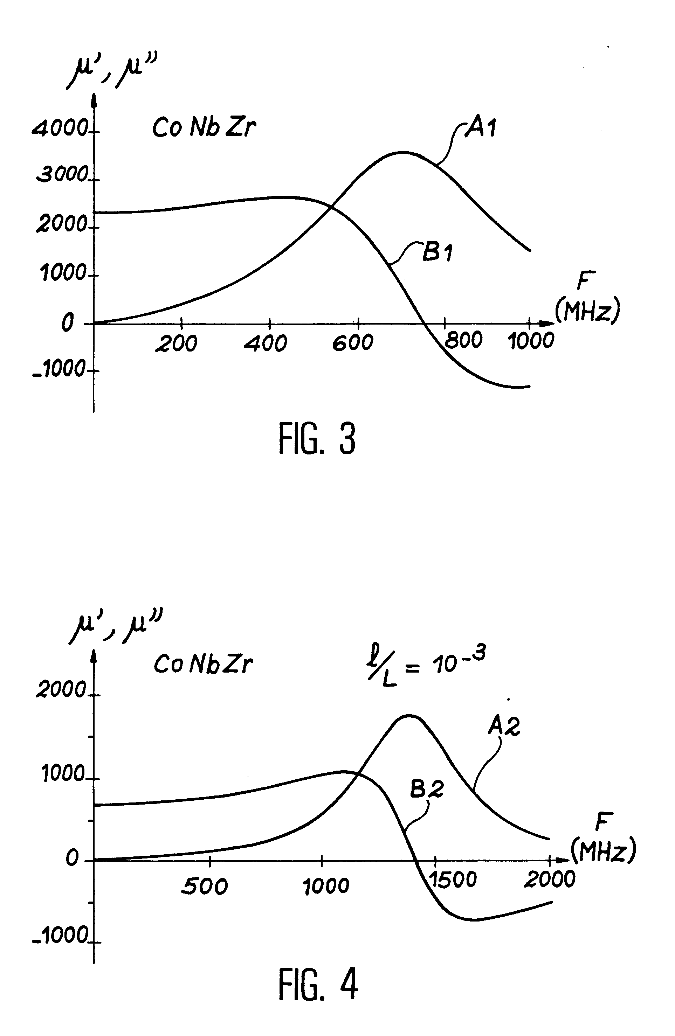

Ceci ressort clairement des figures 3 et 4 qui donnent les variations de la perméabilité magnétique réelle et imaginaire d'une couche de $Co_{87}Nb_{11,5}Zr_{1,5}$ de 200 nm d'épaisseur, respectivement continue et formée de pavés avec $l/L = 10^{-3}$, en fonction de la fréquence d'un champ électromagnétique excitateur. Les courbes $A_1$ et $A_2$ donnent respectivement la perméabilité réelle imaginaire $\mu''$ d'une couche magnétique massive mince et d'une couche magnétique sous forme de pavés et les courbes $B_1$ et $B_2$ correspondent respectivement aux perméabilités magnétiques réelles $\mu'$ d'une couche massive mince et d'une couche sous forme de pavés.

Si l'utilisation de pavés magnétiques séparés par des joints isolants ne modifie que très faiblement les propriétés magnétiques du matériau magnétique amorphe, il n'en est pas de même en ce qui concerne ses propriétés électriques.

En particulier, la conductivité électrique d'un matériau composite selon l'invention ne dépasse pas 20 ohms$^{-1}$.m$^{-1}$, ce qui correspond à la gamme des matériaux isolants alors que le matériau magnétique massif correspondant présente une conductivité électrique de $10^5$ ohm$^{-1}$m$^{-1}$, ce qui correspond à la gamme des matériaux conducteurs électriquement. Ces valeurs sont celles d'un matériau du type CoNbZr avec une quantité de cobalt représentant au moins 80% des atomes du matériau.

En outre, la permittivité électrique imaginaire du matériau selon l'invention, est relativement faible et reste constante jusqu'à 20 GHz.

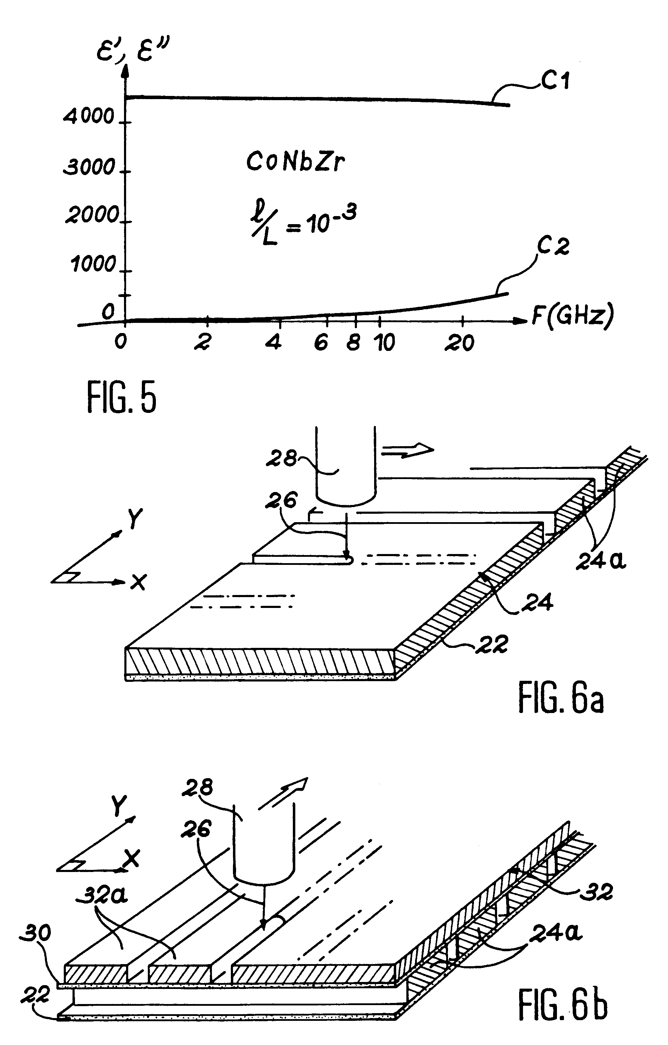

Ceci ressort clairement de la figure 5 qui donne les variations de la permittivité électrique d'un matériau selon l'invention en $Co_{87}Nb_{11,5}Zr_{1,5}$ avec $l/L = 10^{-3}$, en fonction de la fréquence d'un champ électromagnétique excitateur. La courbe $C_1$ donne les variations de la permittivité électrique réelle $\epsilon'$ et la courbe $C_2$ les variations de la permittivité électrique imaginaire $\epsilon''$.

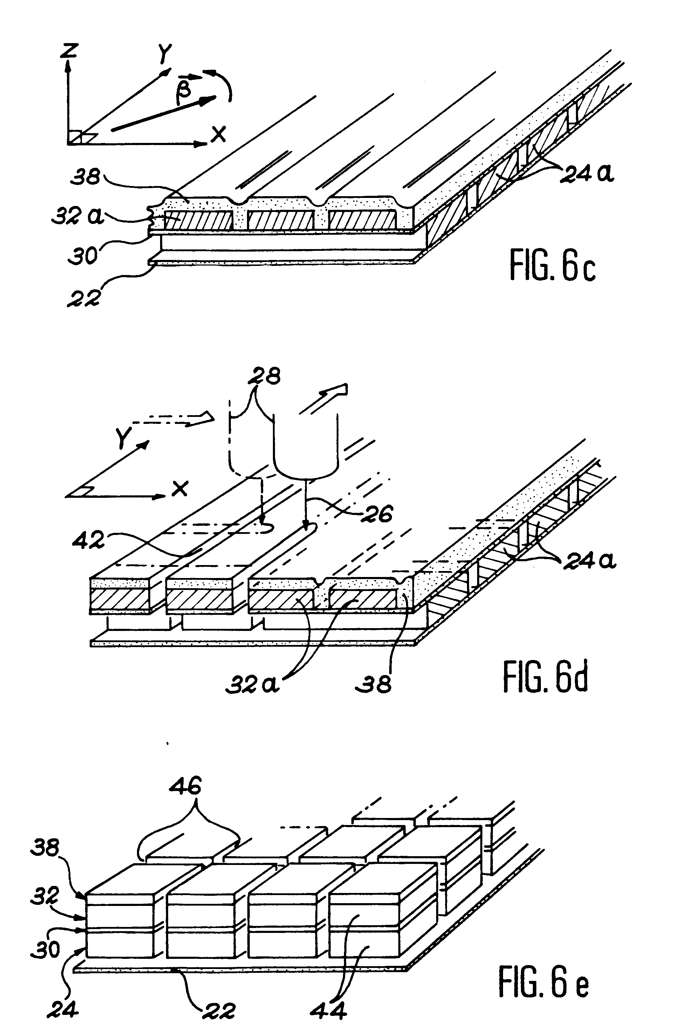

En référence aux figures 6a-6e, on va maintenant donner un exemple de fabrication d'un matériau composite selon l'invention.

La première étape du procédé, comme représenté sur la figure 6a, consiste à déposer sur une première couche d'isolant 22 en SiO$_2$ de 10 nm une première couche continue 24 de $Co_{87}Nb_yZr_z$ de 200 nm d'épaisseur, avec $y + z = 13$. Cette couche 24 est déposée par pulvérisation cathodique à partir de l'évaporation d'une cible massive de cobalt sur laquelle sont disposées des feuillles de niobium et de zirconium dont la surface est ajustée en fonction de la composition du matériau de la couche 24 que l'on

EP 0 308 334 B1

désire obtenir.

Une vitesse de dépôt de la couche 24 de 8,5 nm/min peut être obtenue dans une enceinte de dépôt dans laquelle réside un vide initial inférieur à $10^{-6}$ torr ($10^{-8}$ Pa), dans laquelle circule de l'argon à une pression de $2,5.10^{-3}$ torr ($3.10^{-5}$ Pa) et dans laquelle la puissance radiofréquence utilisée est de 500 W.

On découpe alors dans la couche 24, à l'aide d'un faisceau laser 26, émis par une source 28 et se déplaçant selon la direction X, des bandes magnétiques 24a parallèles entre elles et à la direction X. Ces bandes 24a présentent une largeur de 1 000$\mu$m soit au moins 10 fois inférieure à leur longueur, et sont espacées de 10 $\mu$m.

On effectue ensuite, comme représenté sur la figure 6b, le dépôt d'une seconde couche d'isolant 30 de 10 nm d'épaisseur environ. Cette couche est en particulier une couche de $SiO_2$ déposée par décomposition chimique en phase vapeur (CVD).

Cette couche isolante 30 est ensuite recouverte d'une seconde couche 32 en matériau magnétique amorphe de 200 nm d'épaisseur. Cette couche est déposée comme précédemment par pulvérisation cathodique et présente la composition $Co_{87}Nb_{11,5}Zr_{1,5.}$

On découpe ensuite dans la couche 32, à l'aide du faisceau laser 26, se déplaçant alors selon la direction Y perpendiculaire à la direction X, des bandes magnétiques 32a parallèles à Y de 1 000 $\mu$m de large, séparées de 10 $\mu$m, soit au moins 10 fois plus longues que larges.

Après ce découpage laser, on dépose une troisième couche d'isolant 38 de 10 nm d'épaisseur. Cette couche d'isolant est en particulier une couche de $SiO_2$ déposée par CVD. La structure obtenue est celle représentée sur la figure 6c.

Le procédé se poursuit en effectuant le dépôt d'une troisième couche de CoNbZr que l'on découpe pour former des bandes magnétiques parallèles à X puis le dépôt d'une quatrième couche d'isolant suivi du dépôt d'une quatrième couche de matériau magnétique dans laquelle on forme, par découpe laser, des bandes magnétiques parallèles à la direction Y, puis du dépôt d'une cinquième couche d'isolant et ainsi de suite jusqu'à l'obtention d'un empilement de couches, d'épaisseur souhaitée, cette dernière étant fonction de l'application particulière du matériau, envisagée.

Lorsque l'empilement de couches magnétiques et isolantes est achevé, on effectue un traitement thermique de l'échantillon en présence d'un champ magnétique tournant $\vec{B}$, orienté dans le plan XY, c'est-à-dire dans le plan des couches magnétiques et isolantes. L'intensité du champ magnétique $\vec{B}$ est de l'ordre de 70 kA/m et le traitement thermique consiste à porter l'échantillon à une température de l'ordre de 230°C.

Ce traitement thermique sous champ magnétique tournant permet d'orienter les moments dipolaires des atomes constituant les différentes bandes magnétiques, telles que 24a et 32a, dans le sens de la longueur de ces bandes. Autrement dit, le moment magnétique des atomes formant les bandes 32a est orienté parallèlement à la direction Y et le moment magnétique des atomes des bandes 24a est orienté parallèlement à la direction X.

On réalise alors, par le même procédé de découpage laser et sur toute l'épaisseur de l'empilement des couches magnétiques et isolantes, des tranchées 42 selon les deux directions X et Y. La découpe peut être réalisée sur toute l'épaisseur de l'empilement ou bien s'arrêter sur la dernière couche isolante, correspondant dans le cas présent à la couche 22, si l'on désire que cette couche constitue le support de cohésion du matériau composite selon l'invention.

Les tranchées sont larges de 10 $\mu$m et espacées de 1 000 $\mu$m et ne coïncident pas nécessairement avec les lignes de coupes X et Y des bandes 24a et 32a. Le matériau composite obtenu présente la structure représentée sur la figure 6e, voisine de celle illustrée sur la figure 2. Les références 44 et 46 représentent respectivement les pavés magnétiques et les joints isolants.

L'obtention d'un matériau composite selon l'invention tel que représenté sur la figure 1 est comparable à celui décrit en référence aux figures 6a-6e si ce n'est que le dépôt de chaque couche en matériau magnétique amorphe est suivi d'une gravure conduisant à la formation des pavés magnétiques 6 au lieu des bandes parallèles à X ou Y.

Dans ce mode de réalisation, l'orientation des moments magnétiques des pavés doit se faire couche par couche, c'est-à-dire juste après le dépôt de chaque couche isolante. Ceci complique quelque peu le procédé. Aussi, la mise en oeuvre à partir de bandes X, Y alternativement croisées et découpage en tranchées de tout l'empilement de couches sera préférée.

Bien entendu, les joints isolants sous forme de couches d'air peuvent aussi être obtenus par d'autres techniques que le découpage laser telles que la photolithographie utilisant une gravure sèche (gaz chlorés ou fluorés) ou humide (solution à base d'acides fluorhydrique et nitrique), la découpe par faisceau d'électrons ou la découpe mécanique.

Pour obtenir des joints isolants entre les pavés magnétiques en autre chose que de l'air, il est possible

6

de réaliser une oxydation dans la masse du matériau magnétique conduisant à la formation de joints en oxyde mixte à base de Co, Nb et/ou Zr. Cette oxydation dans la masse peut être réalisée chimiquement ou par implantation d'ions oxygène.

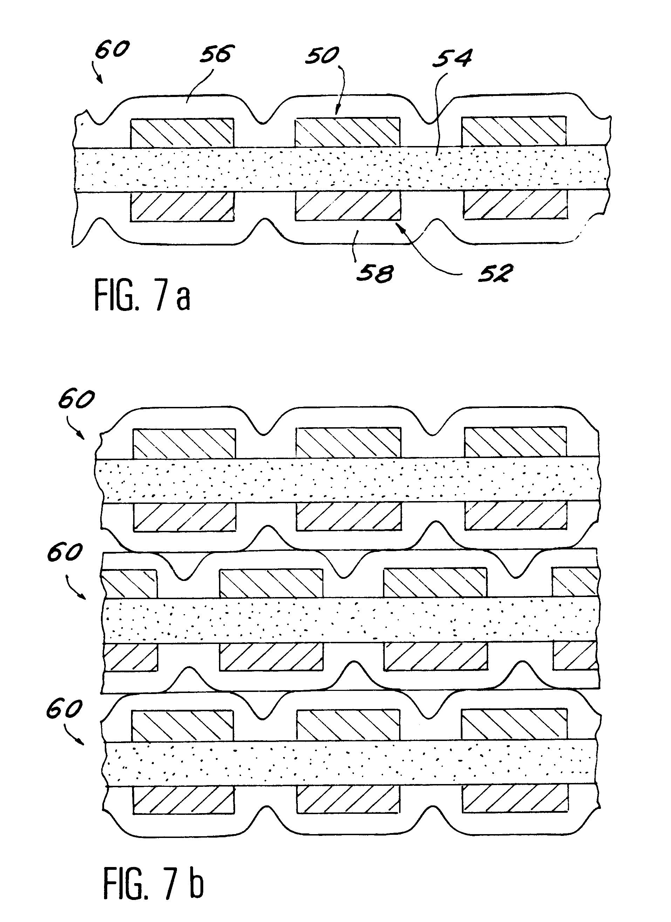

Lorsque l'on désire recouvrir une surface gauche, il est souhaitable que le matériau composite soit souple. Dans, ces conditions on dépose, comme représenté sur la figure 7a, une couche 50 et une couche 52 d'un matériau magnétique de part et d'autre d'un support souple isolant 54 puis on découpe les couches 50 et 52 en pavés comme décrit précédemment. Ensuite, on dépose deux couches d'isolant 56 et 58 respectivement sur les couches 50 et 52 afin d'isoler les pavés les uns des autres. L'ensemble de couches ainsi obtenu porte la référence 60.

Il suffit alors d'empiler n fois cet ensemble 60, comme représenté sur la figure 7b, pour réaliser un empilement satisfaisant et souple permettant de recouvrir toutes surfaces gauches. L'orientation des moments magnétiques est alors réalisée comme décrit précédemment.

Le support isolant 54 peut être une couche de polyimide telle qu'une feuille de Kapton® de chez Dupont de Nemours ou une couche de polyester telle qu'une feuille de Mylar® chez Dupont de Nemours (éthylène glycol + acide téréphtalique). Il en est de même pour les couches isolantes 56 et 58.

Le matériau composite selon l'invention présente l'avantage d'un encombrement faible (épaisseur inférieure à 1 mm), d'une densité surfacique inférieure à 1 kg/m$^2$ (de l'ordre de 0,5 kg/m$^2$) et d'être utilisable dans un grand domaine de fréquences allant de 50 MHz à quelques GHz. Ceci permet, contrairement aux matériaux de l'art antérieur, d'utiliser le matériau selon l'invention dans un plus grand nombre d'applications.

**Revendications**

1. Matériau magnétique composite, qui comprend une alternance de couches (2) en matériau magnétique et de couches (4) en matériau électriquement isolant, caractérisé en ce que chaque couche de matériau magnétique (2) est formée de plusieurs pavés magnétiques (6) séparés les uns des autres par des joints électriquement isolants (8, 8a), le volume total Vp occupé par les pavés et le volume total Vj occupé par les joints et les couches isolantes sont tels que le rapport Vp/Vj varie de 10 à 50.

2. Matériau composite selon la revendication 1, caractérisé en ce que le matériau magnétique est réalisé en un matériau ferromagnétique amorphe à forte perméabilité magnétique.

3. Matériau composite selon la revendication 1 ou 2, caractérisé en ce que le matériau magnétique est un alliage de cobalt et d'au moins un élément choisi parmi le zirconium et le niobium.

4. Matériau composite selon l'une quelconque des revendications 1 à 3, caractérisé en ce que le matériau magnétique présente la formule $Co_xNb_yZr_z$ avec $80 \le x \le 95$ et $y + z = 100-x$.

5. Matériau composite selon la revendication 1, caractérisé en ce que le matériau magnétique présente la formule $Co_{87}Nb_{11,5}Zr_{1,5}$.

6. Matériau composite selon l'une quelconque des revendications 1 à 5, caractérisé en ce que les couches magnétiques (2) présentent des moments magnétiques orientés selon une même direction parallèle au plan (X, Y) des couches.

7. Matériau composite selon l'une quelconque des revendications 1 à 6, caractérisé en ce que les couches magnétiques (2) ont une épaisseur allant de 200 à 400 nm.

8. Matériau composite selon l'une quelconque des revendications 1 à 7, caractérisé en ce que les couches isolantes (4) présentent une épaisseur allant de 10 nm à 10 $\mu$m.

9. Matériau composite selon l'une quelconque des revendications 1 à 8, caractérisé en ce que les joints isolants (8a) sont réalisés par une couche d'air ou une couche d'oxyde.

10. Matériau composite selon l'une quelconque des revendications 1 à 9, caractérisé en ce qu'un support continu (12) est prévu comme dernière couche dudit matériau composite.

11. Procédé de fabrication d'un matériau magnétique composite, selon la revendication 1, caractérisé en ce qu'il comprend les étapes suivantes :
- au moins une étape de dépôt d'une couche en matériau magnétique (24, 32, 50, 52) sur une couche en matériau électriquement isolant (22, 30, 54, 56, 58),
- au moins une étape de découpe de la couche magnétique pour former dans ladite couche magnétique des pavés magnétiques (44) isolés les uns des autres ou au moins une étape de réalisation de joints isolants dans la masse de ladite couche magnétique, le volume total Vp occupé par les pavés magnétiques et le volume total Vj occupé par les isolants étant tels que Vp/Vj va de 10 à 50, et
- au moins une étape d'orientation des moments magnétiques des pavés (44) de la couche magnétique (24, 32) selon une même direction (X, Y) parallèle au plan de la couche magnétique (24, 32).

**12.** Procédé de fabrication selon la revendication 11, caractérisé en ce qu'il comprend les étapes successives suivantes :
(a) dépôt d'une première couche de matériau magnétique (24) sur une première couche de matériau isolant (22),
(b) formation dans la première couche magnétique (24) de bandes magnétiques (24a), parallèles à une première direction (X),
(c) dépôt sur la structure obtenue en (b) d'une seconde couche de matériau isolant (30),
(d) dépôt sur la seconde couche isolante (30) d'une seconde couche de matériau magnétique (32),
(e) formation dans la seconde couche magnétique (32) de bandes magnétiques (32a), parallèles à une seconde direction (Y) perpendiculaire à la première direction (X),
(f) dépôt sur la structure obtenue en (e) d'une troisième couche de matériau isolant (38) puis répétition des étapes (a) à (e) autant de fois que nécessaire,
(g) traitement thermique de la structure obtenue en (f) en présence d'un champ magnétique ($\vec{B}$) tournant dans le plan (X, Y) des couches (22-38),
(h) traitement de la structure obtenue en (g) afin de former dans chaque couche magnétique des pavés magnétiques (44) séparés les uns des autres.

**13.** Procédé de fabrication selon la revendication 11, caractérisé en ce qu'il consiste à réaliser plusieurs empilements (60) de couches isolantes et de couches magnétiques, à assembler ces empilements et à orienter les moments magnétiques des pavés, chaque empilement étant obtenu en :
- déposant une première (50) et une seconde (52) couches de matériau magnétique de part et d'autre d'un support isolant (54),
- découpant dans les deux couches magnétiques les pavés magnétiques, et
- déposant une première (56) et une seconde (58) couches isolantes sur respectivement la première et la seconde couches magnétiques.

**14.** Procédé de fabrication selon la revendication 12, caractérisé en ce que l'étape (h) consiste en un découpage de l'empilement des couches magnétiques (24, 32) et des couches isolantes (30, 38).

**15.** Procédé de fabrication selon l'une quelconque des revendications 11 à 14, caractérisé en ce que les couches magnétiques (24, 32) sont réalisées en un matériau ferromagnétique à forte perméabilité magnétique.

**Claims**

**1.** Composite magnetic material, which comprises an alternation of magnetic material films (2) and electrically insulating material films (4), characterized in that each magnetic material film (2) is formed by several magnetic blocks (6) separate from one another by electrically insulating joints (8, 8a), the total volume Vp occupied by the blocks and the total volume Vj occupied by the joints and the insulating films are such that the ratio Vp/Vj varies from 10 to 50.

**2.** Composite material according to claim 1, characterized in that the magnetic material is produced from a high magnetic permeability, amorphous ferromagnetic material.

**3.** Composite material according to claims 1 or 2, characterized in that the magnetic material is an alloy of cobalt and at least one element chosen from among zirconium and niobium.

EP 0 308 334 B1

4. Composite material according to any one of the claims 1 to 3, characterized in that the magnetic material is of formula $Co_xNb_yZr_z$ with $80 \leq x \leq 95$ and $y+z = 100\text{-}x$.

5. Composite material according to claim 1, characterized in that the magnetic material is of formula $Co_{87}Nb_{11.5}Zr_{1.5}$.

6. Composite material according to any one of the claims 1 to 5, characterized in that the magnetic films (2) have magnetic moments oriented in the same direction parallel to the plane (X, Y) of the films.

7. Composite material according to any one of the claims 1 to 6, characterized in that the magnetic films (2) have a thickness between 200 and 400 nm.

8. Composite material according to any one of the claims 1 to 7, characterized in that the insulating films (4) have a thickness between 10 nm and 10 $\mu$m.

9. Composite material according to any one of the claims 1 to 8, characterized in that the insulating joints (8a) are constituted by an air layer or an oxide layer.

10. Composite material according to any one of the claims 1 to 9, characterized in that a continuous support (12) is provided as the final film of said composite material.

11. Process for the production of a composite magnetic material according to claim 1, characterized in that it comprises the following stages:
    - at least one stage of depositing a magnetic material film (24, 32, 50, 52) on an electrically insulating material film (22, 30, 54, 56, 58),
    - at least one stage of cutting the magnetic film to form therein magnetic blocks (44) which are insulated from one another, or at least one stage of producing insulating joints in the mass of said magnetic film, the total volume Vp occupied by the magnetic blocks and the total volume Vj occupied by the insulants being such that Vp/Vj is between 10 and 50, and
    - at least one stage of orienting the magnetic moments of the blocks (44) of the magnetic film (24, 32) in a same direction (X, Y) parallel to the plane of the magnetic film (24, 32).

12. Production process according to claim 11, characterized in that it comprises the following successive stages:
    (a) deposition of a first amorphous magnetic material film (24) on a first insulating material film (22),
    (b) formation in the first magnetic film (24) of magnetic strips (24a) which are parallel to a first direction (X),
    (c) deposition on the structure obtained in (b) of a second insulating material film (30),
    (d) deposition on the second insulating film (30) of a second amorphous magnetic material film (32),
    (e) formation in the second magnetic film (32) of magnetic strips (32a), which are parallel to a second direction (Y) perpedicular to the first direction (X),
    (f) deposition on the structure obtained in (e) of a third insulating material film (38) and the repeating stages (a) to (e) for the number of times necessary,
    (g) heat treatment of the structure obtained in (f) the preesence of a magnetic field ($\vec{B}$) rotating the plane (X, Y) of the films (22-38),
    (h) treatment of the structure obtained in (g) order to form separate magnetic blocks (44) each magnetic film.

13. Production process according to claim 11, characterized in that it consists of producing several stacks (60) of insulating films and magnetic films, assembling these stacks and orienting the magnetic moments of the blocks, each stack being obtained by depositing a first (50) and a second (52) magnetic material films on either side of an insulating support (54), cutting the magnetic blocks the two magnetic films and depositing a first (56) a second (58) insulating films respectively on the first and second magnetic films.

14. Production process according to claim 12, characterized in that stage (h) consists of cutting the stack of magnetic films (24, 32) and insulating films (30, 38).

9

**15.** Production process according to any one of the claims 11 to 14, characterized in that the magnetic films (24, 32) are made from a high magnetic permeability ferromagnetic material.

## Patentansprüche

**1.** Zusammengesetztes magnetisches Material, welches eine Abwechslung der Schichten (2) aus magnetischem Material und der Schichten (4) aus elektrisch isolierendem Material umfasst, ist dadurch **gekennzeichnet,**
daß jede Schicht des magnetischen Materials durch verschiedene magnetische Blöcke (6) geformt wird, welche voneinander durch elektrisch isolierende Fugen (8, 8a) abgetrennt sind, daß das durch die Blöcke eingenommene Gesamtvolumen $V_p$ und das durch die Fugen und die isolierenden Schichten eingenommene Gesamtvolumen $V_j$ so beschaffen sind, daß das Verhältnis $V_p/V_j$ zwischen 10 und 50 variiert.

**2.** Zusammengesetztes Material gemäß dem Anspruch 1 ist dadurch **gekennzeichnet,** daß das magnetische Material aus einem amorphen ferromagnetischen Material mit starker magnetischer Permeabilität hergestellt wird.

**3.** Zusammengesetztes Material gemäß den Ansprüchen 1 oder 2 ist dadurch **gekennzeichnet,** daß das magnetische Material eine Legierung aus Kobalt und mindestens einem zwischen Zirkonium und Niob ausgewählten Element ist.

**4.** Zusammengesetztes Material gemäß irgendeinem der Ansprüche 1 bis 3, dadurch **gekennzeichnet,** daß das magnetische Material die Formel $Co_xNb_yZr_z$, mit $80 \leq x \leq 95$ und $y + z = 100 - x$ aufweist.

**5.** Zusammengesetztes Material gemäß dem Anspruch 1 ist dadurch **gekennzeichnet,** daß das magnetische Material die Formel $Co_{87}Nb_{11,5}Zr_{1,5}$ aufweist.

**6.** Zusammengesetztes Material gemäß irgendeinem der Ansprüche 1 bis 5, dadurch **gekennzeichnet,** daß die magnetischen Schichten (2) magnetische Momente aufweisen, welche in derselben Richtung parallel zur Ebene (X, Y) der Schichten orientiert sind.

**7.** Zusammengesetztes Material gemäß irgendeinem der Ansprüche 1 bis 6, dadurch **gekennzeichnet,** daß die magnetischen Schichten (2) eine Dicke im Bereich von 200 bis 400 nm haben.

**8.** Zusammengesetztes Material gemäß irgendeinem der Ansprüche 1 bis 7, dadurch **gekennzeichnet,** daß die isolierenden Schichten (4) eine Dicke im Bereich von 10 nm bis 10 $\mu$m aufweisen.

**9.** Zusammengesetztes Material gemäß irgendeinem der Ansprüche 1 bis 8, dadurch **gekennzeichnet,** daß die isolierenden Fugen (8a) mittels einer Luftschicht oder einer Oxydschicht hergestellt werden.

**10.** Zusammengesetztes Material gemäß irgendeinem der Ansprüche 1 bis 9, dadurch **gekennzeichnet,** daß eine durchgehende Unterlage (12) als letzte Schicht des besagten zusammengesetzten Materials vorgesehen ist.

**11.** Verfahren zur Herstellung eines zusammengesetzten magnetischen Materials gemäß dem Anspruch 1 ist dadurch **gekennzeichnet,** daß es die folgenden Abschnitte umfaßt:
- mindestens einen Abschnitt zur Abscheidung einer Schicht aus magnetischem Material (24, 32, 50, 52) auf einer Schicht aus elektrisch isolierendem Material (122, 30, 54, 56, 58),
- mindestens einen Abschnitt zum Ausschneiden aus der magnetischen Schicht, um die besagte magnetische Schicht in magnetischen, voneinander isolierten Blöcken (44) zu formen, oder mindestens einen Abschritt zur Herstellung der isolierenden Fugen in der Masse der besagten magnetischen Schicht, wobei das durch die magnetischen Blöcke eingenommene Gesamtvolumen $V_p$ und das durch die Isolatoren eingenommene Gesamtvolumen $V_j$ so beschaffen sind, daß $V_p/V_j$ von 10 bis 50 geht, und
- mindestens ein Abschnitt zur Ausrichtung der magnetischen Momente der Blöcke (44) der magnetischen Schicht (24, 32) in derselben Richtung (X, Y) parallel zur Ebene der magnetischen Schicht (24, 32)

**12.** Verfahren zur Herstellung gemäß dem Anspruch 11, dadurch **gekennzeichnet,** daß es nacheinander die folgenden Abschnitte umfaßt:

(a) Abscheidung einer ersten Schicht aus magnetischen Material (24) auf einer ersten Schicht aus isolierendem Material (22),

(b) Bildung magnetischer Streifen (24a) in der ersten magnetischen Schicht (24), welche parallel zu einer ersten Richtung (X) sind,

(c) Abscheidung einer zweiten Schicht aus isolierendem Material (30) auf der in (b) erhaltenen Struktur,

(d) Abscheidung einer zweiten Schicht aus magnetischem Material (32) auf der zweiten isolierenden Schicht (30)

(e) Bildung magnetischer Streifen (32a) in der zweiten magnetischen Schicht (32), welche parallel zu einer zweiten, senkrecht zur ersten Richtung (X) stehenden Richtung (Y) sind,

(f) Abscheidung einer dritten Schicht aus isolierendem Material (38) auf der in (e) erhaltenen Struktur und dann Wiederholung der Abschnitte (a) bis (e) so oft als nötig,

(g) thermische Behandlung der in (f) erhaltenen Struktur in Anwesenheit eines magnetischen Feldes (B), welches sich in der Ebene (X, Y) der Schichten (22-38) dreht,

(h) Behandlung der in (g) erhaltenen Struktur, um in jeder magnetischen Schicht voneinander abgetrennte magnetische Blöcke (44) zu formen.

**13.** Verfahren zur Herstellung gemäß dem Anspruch 11 ist dadurch **gekennzeichnet,** daß es aus der Herstellung mehrerer Beschichtungen (60) aus isolierenden Schichten und aus magnetischen Schichten, dem Zusammenfügen dieser Beschichtungen und der Orientierung der magnetischen Momente der Blöcke besteht, wobei jede Beschichtung erhalten wird durch:

- eine Abscheidung einer ersten (50) und einer zweiten (52) Schicht aus magnetischem Material auf den zwei Seiten einer isolierenden Unterlage(54),
- das Ausschneiden der magnetischen Blöcke aus den zwei magnetischen Schichten, und
- der Abscheidung einer ersten (56) und einer zweiten (58) isolierenden Schicht auf den entsprechenden ersten und zweiten magnetischen Schichten.

**14.** Verfahren zur Herstellung gemäß dem Anspruch 12 ist dadurch **gekennzeichnet**, daß der Abschnitt (h) aus einem Ausschneiden aus der Beschichtung mit den magnetischen Schichten (24, 32) und den isolierenden Schichten (30, 38) besteht.

**15.** Verfahren zur Herstellung gemäß irgendeinem der Ansprüche 11 bis 14 ist dadurch **gekennzeichnet,** daß die magnetischen Schichten (24, 32) aus einem ferromagnetischen Material mit starker magnetischer Permeabilität hergestellt werden.

FIG. 1

FIG. 2

FIG. 3

FIG. 4

13

FIG. 5

FIG. 6a

FIG. 6b

FIG. 6c

FIG. 6d

FIG. 6 e

FIG. 7 a

FIG. 7 b